# FASCICULE DE BREVET EUROPEEN

(11) **EP 4 293 331 B1**
(45) Date de publication et mention de la délivrance du brevet: **26.02.2025**
(21) Numéro de dépôt: 23179730.9
(22) Date de dépôt: 16.06.2023
(51) Int. Cl.: G01L 1/14, G01L 5/00, G01L 5/101, G01M 5/00, G01M 7/08, D03D 1/00, D03D 15/533, D03D 11/00

(54) **CAPTEUR TEXTILE, DISPOSITIF DE DÉTECTION COMPRENANT UN TEL CAPTEUR ET MÉTHODE DE DÉTECTION ASSOCIÉE**
TEXTILSENSOR, SENSORVORRICHTUNG MIT EINEM SOLCHEN SENSOR UND DETEKTIONSVERFAHREN DAFÜR
TEXTILE SENSOR, DETECTION DEVICE COMPRISING SUCH A SENSOR AND ASSOCIATED DETECTION METHOD

(30) Priorité: 17.06.2022 FR 2205959
(43) Date de publication de la demande: 20.12.2023
(73) Titulaire: Satab, 43240 Saint Just Malmont (FR)
(72) Inventeur: MAURIN, Jean-Marc, 43240 Saint Just-Malmont (FR); ARNAUD, Daniel, 42520 Saint Appolinard (FR); PIGNOL, David, 43240 Saint Romain Lachalm (FR)
(74) Mandataire: Lavoix

(56) Documents cités:
- JP-A- 2011 102 457
- US-A1- 2003 211 797
- US-B2- 10 338 755

## Description

La présente invention concerne un capteur textile, un dispositif de détection comprenant un tel capteur textile et une méthode de détection mise en oeuvre au moyen d'un tel dispositif de détection.

Dans le domaine de la surveillance des infrastructures, par exemple une route, un bâtiment, un ouvrage d'art, etc., il est connu d'équiper une infrastructure de capteurs, qui sont choisis en fonction du ou des paramètre(s) à surveiller. Par exemple, on connait les capteurs d'humidité, qui permette de détecter des fuites d'eau, de température, etc.

On s'intéresse ici aux capteurs configurés pour détecter un choc ou un appui. Ces capteurs sont par exemple utilisés pour détecter un éboulement le long d'une route à flanc de montagne, une averse de grêle sur une toiture, etc.

De manière simplifiée, un choc est un appui qui ne dure que pendant une fraction de seconde.

Les capteurs connus ne permettent de surveiller que localement les chocs ou les appuis. Il est alors nécessaire d'équiper l'infrastructure considérée d'un réseau de capteurs, qui sont chacun reliés à une unité de contrôle. La mise en place de chaque capteur est alors une opération qui prend du temps.

Lorsque les capteurs sont reliés à l'unité de contrôle par une liaison filaire, la mise en place de chaque fil prend elle-aussi du temps. Lorsque les capteurs comprennent un module de communication sans fil, ce module doit intégrer directement une alimentation en énergie et une unité électronique de gestion, ce qui renchérit le coût du capteur. Un exemple de capteurs de l'art antérieur est décrit par le document US10338755B2.

C'est à ces problèmes qu'entend plus particulièrement remédier l'invention, en proposant un capteur d'appui qui soit économique et pratique à installer.

À cet effet, l'invention concerne un capteur textile, formé par tissage de fils conducteurs et de fils isolants. Le capteur textile présente globalement une forme de ruban, qui s'étend selon un axe longitudinal et qui présente :
- une largeur, mesurée selon un axe transversal qui est orthogonal à l'axe longitudinal, et
- une épaisseur mesurée selon un axe d'épaisseur, qui est orthogonal à l'axe longitudinal et à l'axe transversal.

Selon l'invention :
- le capteur comprend deux nappes textiles, qui sont agencées en regard l'une de l'autre, et qui sont reliées l'une à l'autre par des fils de liaison,
- chaque nappe comprend deux bandes latérales, qui sont opposées l'une à l'autre, qui s'étendent le long de l'axe longitudinal et qui sont séparées par une bande centrale, la bande centrale comprenant des fils de chaine incluant les fils conducteurs, de manière à former une piste de conduction qui s'étend parallèlement à l'axe longitudinal entre les bandes latérales,
- les fils de liaison relient chaque bande latérale d'une nappe à une bande latérale respective de l'autre nappe,
- la piste de conduction d'une nappe est agencée en regard de la piste de conduction de l'autre nappe,
- les fils de liaison forment ensemble une structure d'amortissement élastiquement déformable entre une configuration relâchée, dans laquelle la structure d'amortissement maintient les deux pistes de conduction à distance et en regard l'une de l'autre, et une configuration contrainte, dans laquelle deux pistes de conduction sont plus proches l'une de l'autre que dans la configuration relâchée, la structure d'amortissement tendant à revenir dans sa configuration relâchée par retour élastique.

Grâce à l'invention, les pistes de conduction sont mises en contact l'une avec l'autres lorsque le capteur textile est soumis à un écrasement qui fait passer la structure d'amortissement en configuration contrainte, les pistes de conduction formant ainsi un circuit électrique fermé. Ce passage de la structure d'amortissement peut avoir lieu, localement, sur toute la longueur du capteur textile. Il est ainsi possible, avec un seul capteur textile, de détecter un écrasement du capteur textile en n'importe quel point de sa longueur. L'installation du capteur textile est ainsi plus pratique et économique que l'installation d'un réseau de capteurs de l'art antérieur.

Selon des aspects avantageux mais non obligatoires de l'invention, un tel capteur textile peut incorporer une ou plusieurs des caractéristiques suivantes prises isolément ou selon toute combinaison techniquement admissible :
- Chaque fil de trame est mono-filament et présente, de préférence, un diamètre compris entre 0,1 et 0,2 mm, de préférence encore compris entre 0,12 et 0,18 mm, de préférence encore égal à 0,15 mm.
- Chaque nappe comprend un fil de trame conducteur, tandis que les fils de liaison sont isolants.
- les fils de liaison présentent un titrage compris entre 17 et 1000 dtex, de préférence compris entre 100 et 500 dtex, de préférence encore compris entre 150 et 200 dtex, et/ou les fils de liaison comprennent chacun un nombre de brins compris entre 1 et 200, de préférence compris entre 20 et 150, de préférence encore compris entre 40 et 100.
- Les fils conducteurs sont des fils de cuivre métalliques de préférence réalisés en cuivre ou un de ses alliages.

L'invention concerne aussi un dispositif de détection, comprenant :
- un capteur textile conforme tel que défini précédemment,
- un connecteur, qui est monté sur le capteur textile et qui comprend au moins deux bornes d'entrée, chaque borne d'entrée étant reliée à une piste de conduction respective du capteur textile,
- une unité de contrôle, qui est connectée à chacune des pistes de conduction du capteur textile par l'intermédiaire du connecteur, l'unité électronique de contrôle comprenant :
   - une unité logique de calcul,
   - une source d'énergie électrique,
dans lequel l'unité électronique de contrôle est configurée :
- pour appliquer une première grandeur électrique aux bornes d'entrée,
- pour mesurer une deuxième grandeur électrique aux bornes d'entrée,
- en fonction des première et deuxième grandeurs électriques, en déduire une information sur l'état du capteur textile.

L'invention concerne également une méthode de détection mise en oeuvre au moyen du dispositif de détection tel que défini précédemment, la méthode de détection comprenant les étapes successives consistant à :
a) appliquer une première grandeur électrique aux bornes d'entrée reliées aux deux pistes de conduction, et mesurer une deuxième grandeur électrique aux bornes d'entrée,
b) en fonction des première et deuxième grandeurs électriques, en déduire une information sur l'état du capteur textile.

Cette méthode induit les mêmes avantages que ceux mentionnés ci-dessus au sujet du capteur textile de l'invention.

Avantageusement :
- À l'étape a), la première grandeur électrique est une tension continue, appliquée entre les bornes d'entrée, tandis que la deuxième grandeur électrique est un courant électrique, alors qu'à l'étape b), si la deuxième grandeur électrique est non nulle, alors on en déduit un contact entre les deux pistes de conduction.
- À l'étape a), la première grandeur électrique est un courant électrique, tandis que la deuxième grandeur électrique est une tension électrique, tandis qu'à l'étape b), on en déduit une capacité du capteur textile, la valeur calculée étant enregistrée dans une mémoire de l'unité de contrôle, que les étapes a) et b) sont répétées plusieurs fois, et les valeurs successives de capacité sont comparées entre elles, et que si une différence entre deux mesures de capacité successives est non nulle, alors on en déduit un changement d'état du capteur, notamment un écrasement du capteur.

L'invention sera mieux comprise, et d'autres avantages de celle-ci apparaîtront plus clairement à la lumière de la description qui va suivre, de deux modes de réalisation d'un capteur textile, d'un dispositif de détection et d'un procédé de détection, conformes à son principe, donnée uniquement à titre d'exemple et faite en référence aux dessins annexés, dans lesquels :
- [Fig 1] la figure 1 est une vue en perspective, partiellement éclatée, d'un dispositif de détection conforme à un premier mode de réalisation de l'invention, le dispositif de détection comprenant un capteur textile, lui aussi conforme à l'invention ;

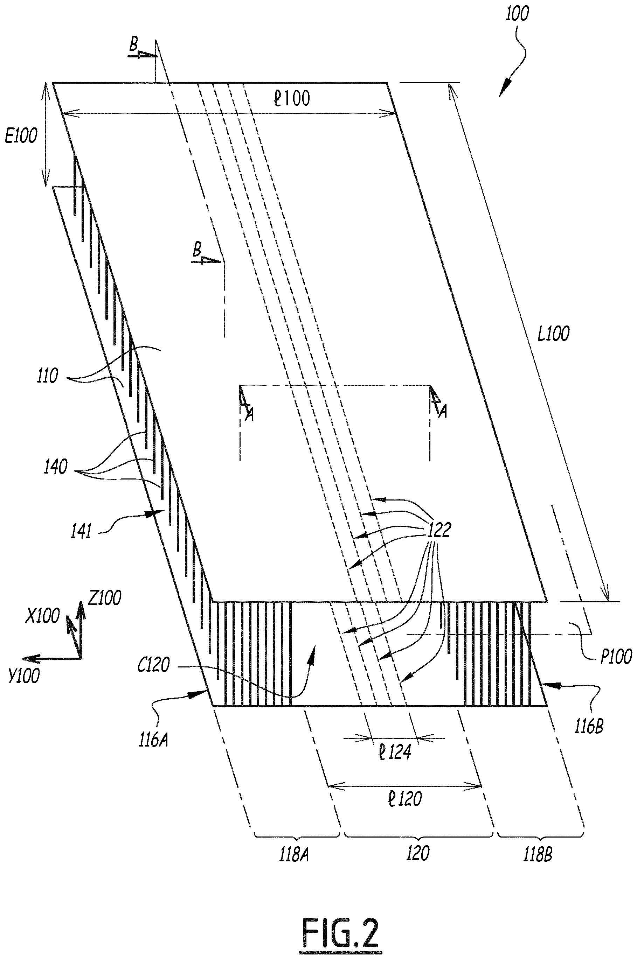

- [Fig 2] la figure 2 représente schématiquement une vue en perspective du capteur textile de la figure 1 ;
- [Fig 3] la figure 3 représente, sur deux inserts a) et b), le capteur textile de la figure 2, observé en coupe selon deux plans AA et BB à la figure 2 ;
- [Fig 4] la figure 4 est une vue en perspective d'une unité de contrôle du dispositif de détection de la figure 1 ;
- [Fig 5] la figure 5 est un schéma synoptique illustrant des étapes d'une méthode de détection mise en oeuvre au moyen du dispositif de détection de la figure 1, et
- [Fig 6] la figure 6 représente respectivement et de manière simplifiée, sur deux inserts a) et b), une coupe du capteur textile de la figure 2 et une analogue coupe d'un capteur textile conforme à un deuxième mode de réalisation.

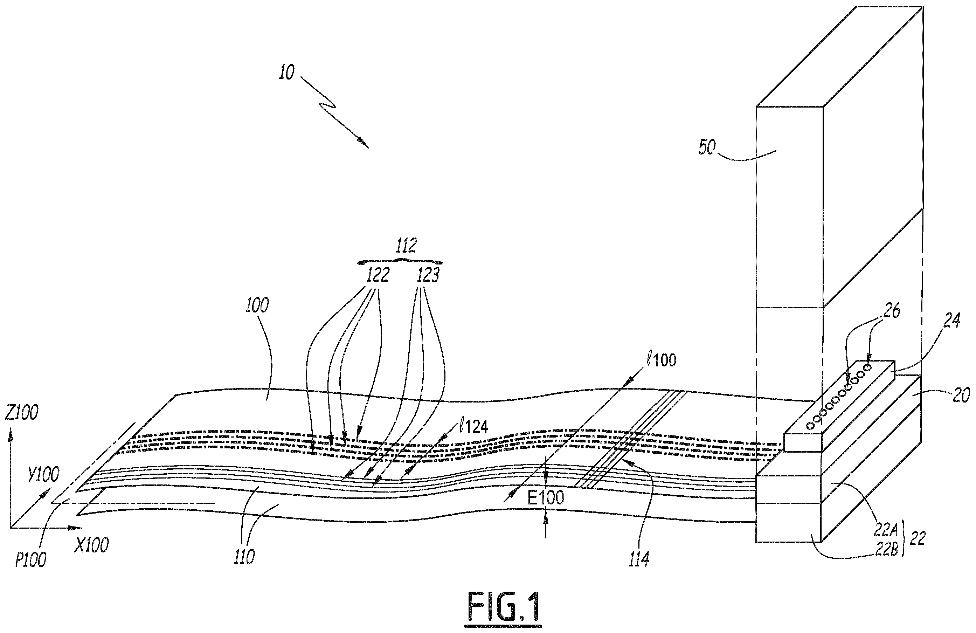

Un dispositif de détection 10 est représenté sur la figure 1. Le dispositif de détection 10 comprend un capteur textile 100, conforme à un premier mode de réalisation de l'invention, un connecteur 20 et une unité électronique de contrôle 50, qui est reliée au capteur textile 100 par l'intermédiaire du connecteur 20.

Par « textile » on entend que le capteur 100 est constituée d'un matériau fait d'entrecroisements de fils. Le capteur textile 100 - aussi simplement appelé « capteur 100 » - est ici formé par tissage de fils, en particulier par tissage de fils conducteurs et de fils isolants, comme détaillé plus loin. Le capteur 100 présentant globalement une forme de ruban. Le capteur 100 est ainsi fabriqué de manière continue. Lors de sa mise en place, le capteur 100 est découpé à la longueur voulue par l'utilisateur.

Dans la suite, on considère que le capteur textile 100 est mis à plat, sachant que dans la réalité, le capteur 100 peut être plié, enroulé, galbé, etc., notamment en fonction de la géométrie d'un support sur lequel il est apposé. Le capteur 100 s'étend selon un axe longitudinal X100 et présente une longueur L100, mesurée selon l'axe longitudinal X100, une largeur ℓ100 mesurée selon un axe transversal Y100 qui est orthogonal à l'axe longitudinal X100. Lorsque le capteur 100 est mis à plat, le capteur 100 s'étend selon un plan moyen P100 qui est parallèle à l'axe longitudinal X100 et à l'axe transversal Y100.

Le capteur 100 comprend deux nappes textiles 110, qui sont agencées en regard l'une de l'autre, et qui sont reliées l'une à l'autre par des fils de liaison 140. Les nappes 110 s'étendent chacune de part et d'autre du plan moyen P100. On définit une épaisseur E100 du capteur 100 comme étant une distance entre les deux nappes textiles 110, mesurée selon un axe d'épaisseur Z100, qui est orthogonal à l'axe longitudinal X100 et à l'axe transversal Y100. Autrement dit l'axe d'épaisseur Z100 est orthogonal au plan moyen P100. Lorsque le capteur 100 est déroulé et n'est soumis à aucune autre contrainte externe, on considère que l'épaisseur E100 est constante sur l'ensemble du capteur 100.

Dans l'exemple illustré, la largeur ℓ100 est égale à 25 mm, tandis que l'épaisseur E100 est égale à 3 mm. Les proportions ne sont pas respectées sur les dessins. La longueur L100 est choisie par l'utilisateur en fonction de la longueur de la zone à surveiller avec le capteur 100. Cette longueur peut être de quelques dizaines de centimètres ou atteindre plusieurs centaines de mètres, voire dépasser 1 kilomètre.

Les deux nappes 110 sont, de préférence, symétriques par rapport au plan moyen P100. On décrit ci-dessous plus particulièrement la nappe 110 représentée en partie basse des figures. Ce qui est valable pour cette nappe 110 est transposable à l'autre nappe 110, par symétrie par rapport au plan moyen P100. Chaque nappe 110 est formée d'un tissage de fils de chaine et de fils de trame. Sur la figure 1, quatre fils de chaîne 112 et quatre fils de trame 114 sont schématiquement représentés en traits continus, les autres étant omis par souci de simplification, même si l'ensemble de la nappe 110 est formé de fils tissés 112 et 114.

Chaque nappe 110 comprend deux bords opposés 116A et 116B, qui sont parallèles à l'axe longitudinal x100 et le long desquels s'étendent deux bandes latérales 118A et 118B. Les deux bandes latérales 118A et 118B sont ainsi opposées l'une à l'autre et s'étendent selon l'axe longitudinal X100. Les deux bandes latérales 118A et 118B sont séparées par une bande centrale 120.

Les bandes centrales 120 des deux nappes textiles 110 sont agencées en regard l'une de l'autre et définissent entre elles une cavité C120.

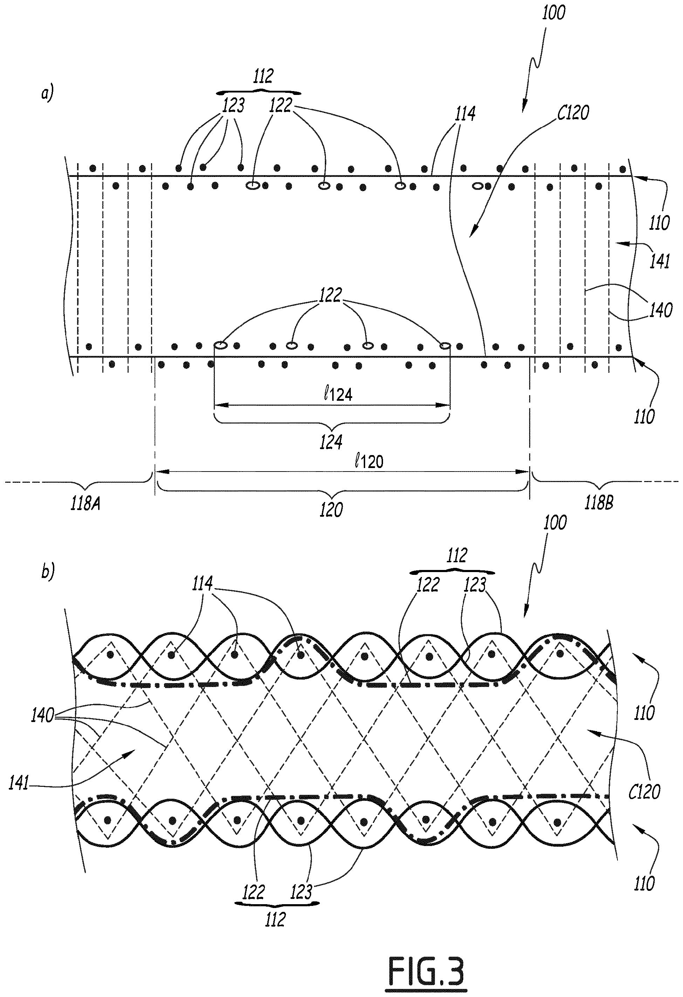

La bande centrale 120 comprend des fils de chaîne 112 qui incluent des fils conducteurs 122, de manière à former une piste de conduction 124, qui s'étend parallèlement à l'axe longitudinal X100. En d'autres termes, certains des fils de chaîne 112 sont des fils électriquement conducteurs 122, les autres étant des fils électriquement isolants, référencés 123. Sur l'insert a) de la figure 3, les fils de chaîne électriquement conducteurs 122 sont représentés schématiquement en blanc et les fils de chaîne électriquement isolants 123 sont représentés schématiquement en noir. Sur l'insert b) de la figure 3, les fils de chaîne électriquement conducteurs 122 sont représentés schématiquement en traits mixtes et les fils de chaîne électriquement isolants 123 sont représentés schématiquement en noir.

Dans l'exemple illustré, les fils conducteurs 122 sont au nombre de quatre. Les fils conducteurs 122 sont réalisés en un matériau conducteur, de préférence métallique, de préférence encore exemple du cuivre ou un de ses alliages. Avantageusement, les fils conducteurs 122 métalliques sont recouverts d'un traitement de surface pour empêcher l'oxydation. Par exemple, les fils conducteurs 122 sont argentés. Les fils conducteurs 122 sont de préférence des fils multi-brins, en particulier des torsades de multi-filaments. Dans l'exemple illustré, les fils conducteurs 122 sont des torsades de multi-filaments de cuivre. Cette technologie de fil conducteur 122 facilite le tissage et garantit aux nappes textiles 110 une souplesse satisfaisante.

La piste de conduction 124 est une portion de la bande centrale qui inclut tous les fils conducteurs 122 et dont la largeur correspond à la distance, mesurée selon l'axe transversal Y100, entre les deux fils conducteurs 122 les plus éloignés. Dans l'exemple illustré, chaque bande centrale 120 présente une largeur e120, mesurée parallèlement à l'axe transversal Y100, égale à 6 mm, tandis que la piste de conduction 124 présente une largeur ℓ124 de 3 mm, les fils conducteurs 122 étant espacés de 1 mm. Les pistes de conduction 124 des deux nappes textiles 110 sont agencées en regard l'une de l'autre, tandis que chaque bande latérale 118A ou 118B, appartenant à une des nappes 110, est agencée en regard d'une bande latérale appartenant à l'autre nappe 110.

Les fils de liaison 140 relient chaque bande latérale 118A ou 118B d'une nappe 110 à celle des bandes latérales située en regard, ainsi la piste de conduction 124 d'une des nappes 110 est maintenue en regard de la piste de conduction 124 de l'autre nappe 110. On comprend que le capteur textile 100 est obtenu par tissage tridimensionnel, dit aussi tissage 3D.

Un exemple d'agencement des fils de chaine 112, y compris les fils conducteurs 122 et les fils isolants 123, des fils de trame 114 et des fils de liaison 140 est illustré à la figure 3. L'insert a) est une coupe du capteur 100 selon un plan de coupe orthogonal aux fils de chaîne 112, qui sont représentés par des points noirs pour les fils isolants 123 et par des ellipses blanches pour les fils conducteurs 122. Les fils de trames sont représentés en traits continus noirs. Les fils de liaison 140 sont représentés en pointillés.

L'insert b) est une coupe du capteur 100 selon un plan de coupe orthogonal aux fils de trame 114, qui sont représentés par des points. Les fils de liaison 140 sont représentés en pointillés, tandis que les fils de chaîne conducteurs 122 sont représentés en traits mixtes et les fils de chaîne isolants 123 sont représentés en traits continus noirs. Les fils conducteurs 122 sont enserrés dans la nappe textile 110 correspondante, notamment tissés en tant que fils de chaîne de cette nappe textile, de sorte qu'ils font partie intégrante de cette nappe textile 110. Les fils conducteurs 122 ne sont pas mobiles en translation longitudinale ou transversale par rapport au reste de la nappe textile 110 correspondante.

Dans l'exemple, les fils de chaine isolants 123 s'entrecroisent autour de chaque fil de trame 114 successif, avec une armure de type taffetas de manière à homogénéiser la flexibilité des nappes 110. À l'inverse, les fils conducteurs 122 sont avantageusement situés préférentiellement du côté de la cavité C120, de manière à augmenter une surface de chaque piste de conduction 124 en regard de l'autre piste de conduction 124. À cet effet, les fils conducteurs 122 sont tissés avec une armure « flottante » par rapport à la nappe 110 à laquelle ils appartiennent. Par armure flottante, on entend par exemple une armure de type satin, sergé, nattée, dont les flottés sont orientés du côté de la cavité C120. Dans l'exemple de la figure 3b), les flottés des fils conducteurs 122 sont de trois fils. Les flottés sont de préférence inférieurs à 8 fils, pour éviter que les deux pistes de conduction 124 n'entrent en contact l'une avec l'autre lorsque le capteur textile 100 est plié.

Les fils de liaison 140 forment ensemble une structure d'amortissement 141 élastiquement déformable entre une configuration relâchée et une configuration contrainte. La structure d'amortissement 141 est formée par l'ensemble des fils de liaison 140, situés de part et d'autre de la cavité C120 selon l'axe transversal Y100. Dans la configuration relâchée, qui correspond au cas où aucun effort extérieur d'écrasement n'est exercé sur le capteur 100, la structure d'amortissement 141 maintient les deux nappes 110, donc les deux pistes de conduction 124, à distance et en regard l'une de l'autre selon l'axe d'épaisseur Z100. Dans la configuration contrainte, la structure d'amortissement 141 est écrasée sur elle-même élastiquement, au point que les deux pistes de conduction 124 sont plus proches l'une de l'autre que dans la configuration relâchée. La structure d'amortissement 141 tend à revenir dans sa configuration relâchée par retour élastique.

Tant qu'aucune force externe n'est appliquée au capteur textile 100, les deux pistes de conduction 124 restent, sous l'action de la structure d'amortissement 141, à une distance constante l'une de l'autre, sensiblement égale, aux épaisseurs des nappes textiles 110 près, à l'épaisseur E100 du capteur textile 100. Lorsqu'une force d'appui externe est appliquée au capteur textile 100 parallèlement à l'axe d'épaisseur Z100, cette force d'appui tend à faire ployer les fils de liaison 140 et à écraser la structure d'amortissement 141, en rapprochant l'une de l'autre les pistes de conduction 124. Si la force d'appui est suffisante, les pistes de conduction 124 entrent en contact l'une avec l'autre, suite à l'écrasement complet de la structure d'amortissement 141 à l'endroit où la force d'appui est exercée.

On définit une raideur du capteur textile 100 comme étant égale à une masse à appliquer sur un disque présentant une surface de 1 cm² (centimètre-carré) et centrée sur la piste de conduction 124 de la nappe 110 supérieure pour mettre en contact les pistes de conduction 124 l'une avec l'autre. La masse est exprimée en kilogramme. La surface de 1 cm² correspond approximativement la surface d'un doigt. La raideur du capteur textile 100 s'apparente donc à une pression et correspond à la capacité du capteur textile 100 à résister à l'écrasement. Dans l'exemple illustré, le capteur textile 100 à une raideur de 1 kg/cm², ce qui correspond donc à une masse de 1 kg appliquée sur 1 cm².

La raideur du capteur textile 100 dépend notamment du nombre et de la nature des fils de liaison 140, de leur taille, ou titrage, du nombre de brins qui composent chaque fil de liaison 140, etc.

De préférence, les fils de liaison 140 sont des fils synthétiques, de manière à résister aux contraintes environnementales, notamment à l'humidité, et à garder des caractéristiques mécaniques stables dans le temps. De préférence encore, les fils de liaison 140 sont réalisés en polyester, de manière à résister aux rayons ultra-violets.

On comprend que plus les fils de liaison 140 sont gros, et plus ils sont rigides. Le titrage d'un fil est généralement exprimé en « dtex », ou décitex, qui correspond à la masse exprimée en grammes de 10 000 m de ce fil. Les fils de liaison 140 présentent un titrage compris entre 78 et 1000 dtex, de préférence compris entre 100 et 500 dtex, de préférence encore compris entre 150 et 200 dtex. Dans l'exemple illustré, le titrage des fils de liaison 140 est égal à 167 dtex.

Les fils sont généralement composés de plusieurs brins, qui sont torsadés ensemble pour former le fil. De manière schématique, à titrage égale, plus les fils comprennent un nombre important de brins, et plus ces fils sont souples. Les fils de liaison 140 comprennent chacun un nombre de brins compris entre 10 et 200, de préférence compris entre 20 et 150, de préférence encore compris entre 40 et 100. Dans l'exemple illustré, les fils de liaison 140 comprennent 48 brins.

Lorsque le capteur 100 est plié parallèlement à l'axe transversal Y100, par exemple pour suivre une surface gauche sur laquelle il est apposé, les nappes 110 ont tendance à se rapprocher l'une de l'autre au niveau de la pliure, et les pistes de conduction 124 risquent d'entrer en contact l'une avec l'autre de manière fortuite, alors même qu'aucun autre effort externe n'est appliqué sur le capteur 100. De manière avantageuse, l'utilisation d'un fil mono filament pour le fil de trame 114 des nappes 110 permet de réduire ce risque de rapprochement des nappes textiles 110 au niveau des éventuelles pliures transversales. Un tel fil mono filament est aussi appelé « crin ». Avantageusement, le fil de trame 114 mono filament présente un diamètre compris entre 0,1 et 0,2 mm, de préférence compris entre 0,12 et 0,18 mm. Dans l'exemple illustré, le fil de trame 114 est un fil monofilament, réalisé en en un matériau synthétique, ici du polyester, et présentant un diamètre égal à 0,15 mm.

Le connecteur 20 comprend un corps principal 22, qui est ici réalisé en deux parties 22A et 22B, qui sont pincées sur le capteur textile 100 dans une configuration assemblée du connecteur. Le connecteur 20 comprend aussi un bornier 24, qui est ici ménagé en saillie sur le corps principal 22 et qui comprend au moins deux contacts électriques 26. Les contacts électriques 26 sont ici représentés par des trous, au nombre de dix. Le bornier 24 est donc ici un bornier femelle. Parmi ces contacts électriques 26, deux contacts électriques 26 sont respectivement reliés aux deux pistes de conduction 124 du capteur textile 100. Ces contacts électriques 26 reliés aux pistes de conduction 124 sont ainsi des bornes d'entrée du connecteur 20.

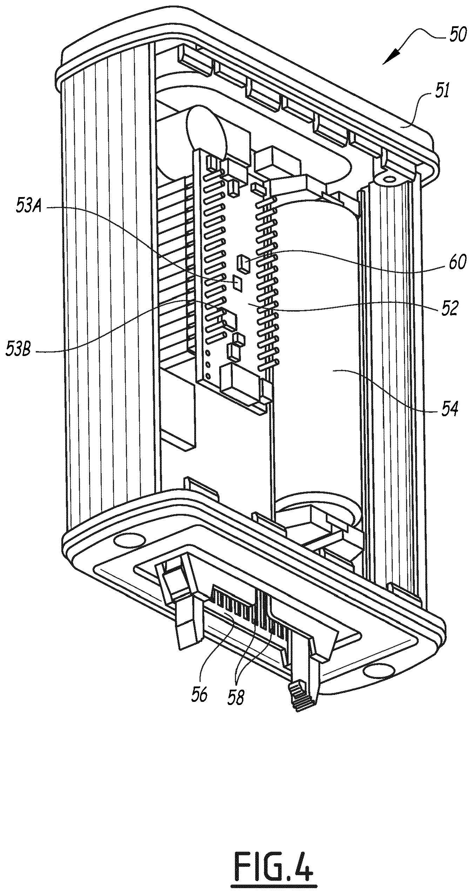

Sur la figure 4, l'unité de contrôle 50 est partiellement représentée, un couvercle de l'unité de contrôle 50 étant omis pour révéler l'intérieur de l'unité de contrôle. L'unité de contrôle 50 comprend ici un boitier 51 qui reçoit une unité logique de calcul 52 et une source d'énergie électrique 54, pour alimenter l'unité logique de calcul 52. La source d'énergie 54 est ici une pile électrique. L'unité de contrôle 50, et par extension le dispositif de détection 50, sont ainsi autonomes. En variante non représentée la source d'énergie est externe au boitier 51.

L'unité logique de calcul 52 est représentée par une carte de circuit imprimé sur laquelle sont montés divers composants électroniques. L'unité logique de calcul 52 comprend ainsi, entre autres, un micro-processeur 53A et une mémoire 53B, la mémoire étant configurée pour stocker des instructions exécutables par le micro-processeur et pour enregistrer des résultats de calculs effectués par le micro-processeur.

L'unité de contrôle 50 comprend aussi un bornier complémentaire 56, qui est ici ménagé sur une surface externe du boitier 51. Le bornier complémentaire 56 est configuré pour coopérer, notamment par complémentarité de formes, avec le bornier 24 du connecteur 20. Le bornier complémentaire 56 est donc ici un bornier mâle, qui comprend des broches 58, configurées pour être connectées électriquement aux contacts électriques 26 lorsque le bornier complémentaire 56 est assemblé au bornier 24. Les broches 58 sont électriquement reliées à l'unité logique de calcul 52.

Sur la figure 1, l'unité de contrôle 50 est représentée éloignée du connecteur 20 pour révéler le bornier 24. Lorsque le lorsque le bornier complémentaire 56 est raccordé au bornier 24, l'unité de logique 52 est reliée aux bornes d'entrée du connecteur 20, autrement dit est reliée aux pistes de conduction 124 du capteur textile 100.

En variante non représentée l'unité électronique de contrôle 50 est reliée au connecteur 20 par l'intermédiaire d'une rallonge, par exemple une nappe de câbles ou une nappe textile intégrant des pistes de conduction.

L'unité logique 52 est configurée pour appliquer une première grandeur électrique à une borne d'entrée, parmi les deux bornes d'entrée mentionnées ci-dessus, et pour mesurer une deuxième grandeur électrique sur l'autre borne d'entrée, parmi ces deux bornes. En fonction des valeurs des première et deuxième grandeurs électriques, on en déduit une information sur l'état du capteur textile 100. L'unité de contrôle 50 comprend avantageusement des moyens d'alerte 60, représentés schématiquement par un composant de l'unité logique 52, les moyens d'alerte 60 étant configurés pour transmettre à l'utilisateur une information relative à un état du capteur textile 100.

Dans l'exemple illustré, les moyens d'alerte 60 comprennent un dispositif radiofréquence, configuré pour envoyer à l'utilisateur un message d'alerte lorsqu'un écrasement du capteur textile est détecté. De manière alternative, les moyens d'alerte 60 comprennent des diodes électroluminescentes, ou LED, pour transmettre un signal visuel à l'utilisateur, un vibreur, dit aussi « buzzer » en anglais, pour transmettre un signal auditif à l'utilisateur, etc.

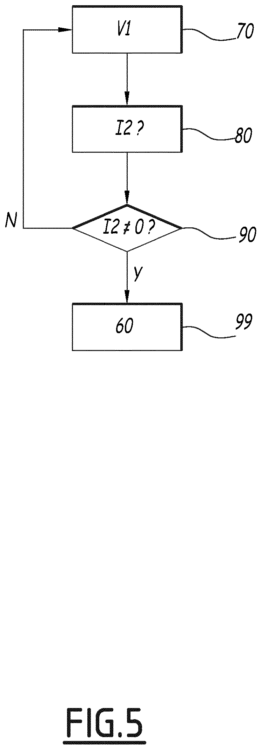

On détaille à présent, à l'aide de la figure 5, une méthode de détection mise en oeuvre au moyen du dispositif de détection 10.

Au cours d'une étape 70, l'unité logique 52 applique une première grandeur électrique aux bornes d'entrée du connecteur 20 qui sont reliées aux deux pistes de conduction 124. Dans l'exemple illustré, la première grandeur électrique est une tension électrique continue V1 appliquée entre ces deux bornes d'entrée.

Au cours d'une étape 80, l'unité logique 52 mesure une deuxième grandeur électrique aux bornes d'entrée. Dans l'exemple illustré, la deuxième grandeur électrique est un courant électrique circulant entre les deux bornes d'entrée du connecteur 20 qui sont reliées aux deux pistes de conduction 124. Le courant électrique mesuré présente une intensité I2.

Si le capteur textile 100 ne subit aucun écrasement, alors les pistes de conduction 124 ne sont pas en contact l'une sur l'autre, et aucun courant électrique ne peut circuler entre les deux pistes de conduction 124. Dans ce cas, le courant est nul et son intensité I2 vaut 0.

À l'inverse, si le capteur textile 100 est écrasé, causant la mise en contact des pistes de conduction 124 l'une sur l'autre, alors un courant peut circuler entre les deux bornes 26 reliées aux deux pistes de conduction 124. La mesure d'un courant électrique d'intensité I2 non nulle aux bornes d'entrée du connecteur 20 témoigne donc d'un contact entre les deux pistes de conduction 124, autrement dit témoigne d'un écrasement du capteur textile 100.

Au cours d'une étape 90, l'unité électronique de contrôle 50 vérifie si l'intensité I2 du courant est non-nulle. Si cette intensité est nulle, alors l'unité de contrôle revient à l'étape 70. Dans le cas contraire, un écrasement est détecté et un signal d'alerte est transmis à l'utilisateur, à l'aide des moyens d'alerte 60, lors d'une étape 99. Dans l'exemple illustré, le message d'alerte envoyé à l'utilisateur inclut l'instant auquel l'écrasement du capteur textile 100 a été détecté.

La succession des étapes 70 à 90 constitue un cycle de mesure du dispositif de détection 10. Ce cycle de mesure est avantageusement répété plusieurs fois, de préférence à intervalles réguliers, et les valeurs mesurées sont enregistrées dans la mémoire 53B de l'unité logique 52 conjointement à une information sur l'instant de mesure. Dans l'exemple illustré, le cycle de mesure est répété à une fréquence de 10 kHz - kilo Hertz -. Il est ainsi possible de détecter les écrasements qui ne durent que quelques fractions de milliseconde. De tels écrasements correspondent à la chute d'objets, par exemple des chutes de cailloux, de grêle, etc., qui écrasent le capteur textile 100 pendant un temps très court.

On comprend qu'un grêlon, même gros, aura probablement sur le capteur textile 100 un impact plus faible qu'un gros caillou. Plus généralement, la raideur du capteur textile 100 est adaptée selon la nature de l'écrasement que l'on cherche à détecter. Comme mentionné précédemment, il est possible d'ajuster la nature des fils de liaison 140 pour adapter les propriétés de la structure d'amortissement 141. Il est aussi possible d'ajuster, dans le même but, le nombre total et/ou l'implantation des fils de liaison 140, qui relient entre eux les bandes latérales 118A et 118B des nappes textiles 110.

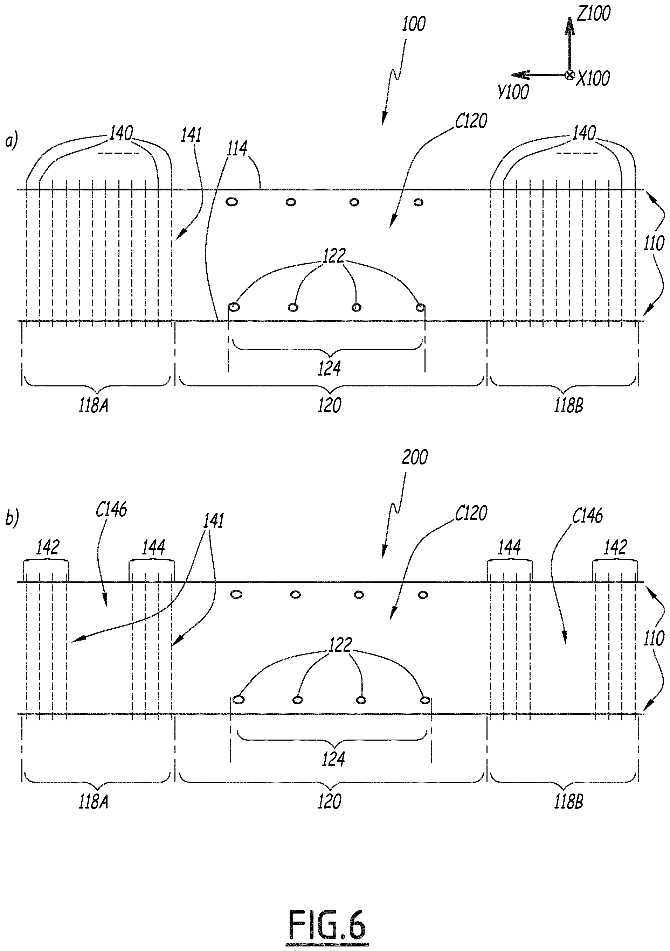

La figure 6 représente, sur son insert a), une coupe du capteur textile 100 conforme au premier mode de réalisation, tandis que l'insert b) est une coupe d'un capteur textile 200 conforme à un deuxième mode de réalisation. Sur les deux inserts a) et b), les fils de chaine isolants ne sont pas représentés.

Dans le deuxième mode de réalisation, les éléments analogues à ceux du premier mode de réalisation portent les mêmes références et fonctionnent de la même façon. On décrit principalement les différences entre les premier et deuxième modes de réalisation.

Dans le premier mode de réalisation, les fils de liaison 140 sont tissés de manière continue, selon l'axe transversal Y100, au niveau de chaque bande latérale 118A ou 118B. Chaque brande latérale 118A ou 118B comprend ainsi un seul groupe de douze fils de liaison 140.

Dans le deuxième mode de réalisation, les fils de liaison 140 sont les mêmes que les fils de liaison du premier mode de réalisation, mais les fils de liaison 140 sont tissés de manière discontinue selon l'axe transversal Y100, au niveau de chaque bande latérale 118A ou 118B. Pour chaque bande latérale 118A ou 118B, les fils de liaison 140 sont ici répartis en deux groupes 142 et 144, qui comprennent quatre fils de liaison 140 chacun et qui sont séparés par une cavité C146.

On comprend que la raideur du capteur textile 200 du deuxième mode de réalisation est inférieure à la raideur du capteur textile 100 du capteur du premier mode de réalisation. Dans l'exemple illustré, la raideur du capteur textile 200 est égale à 0,5 kg/cm².

Dans les deux modes de réalisation, les fils de trame 114 des nappes 110 sont réalisés en un matériau électriquement isolant, en particulier un matériau synthétique, de préférence du polyester.

En variante non représentée, les fils de trame 114 incluent des fils réalisés en un matériau conducteur. Par exemple, les fils de trame 114 incluent des fils conducteurs analogues aux fils conducteurs 122. Les fils conducteurs 122, agencés parallèlement à l'axe longitudinal X100, sont ainsi reliés par chacun des fils de trame 114 conducteurs. Ainsi, chaque bande de conduction 124 devient une surface conductrice. Le capteur textile comprend ainsi deux surface conductrices situées en regard l'une de l'autre, formant un condensateur. Les fils de liaison 140 sont isolants. De préférence, tous les fils de chaine 112 des bandes centrales 120 sont des fils conducteurs, par exemple du type des fils conducteurs 122, de manière à augmenter à agrandir les deux surfaces conductrices. Alternativement, les fils de chaine 112 des bandes latérales 118A et 118B de chaque nappe 110 incluent aussi des fils conducteurs.

Un condensateur présente une capacité qui dépend de la géométrie des surfaces conductrices mises en regard, ainsi que de l'intervalle entre ces deux surfaces conductrices, sans qu'il y ait contact entre ces deux surfaces conductrices. Il est ainsi possible de déduire un rapprochement des pistes de conduction 124 en mesurant une variation de la capacité du condensateur formé par le capteur textile.

La méthode de détection décrite précédemment est adaptée sur ce principe.

La première grandeur électrique appliquée lors de l'étape 70 est un courant électrique variable, tandis que la deuxième grandeur électrique détectée lors de l'étape 80 est une tension électrique. On mesure ainsi la charge du condensateur formé par les deux pistes de conductions 124 en regard.

À l'étape 90, on déduit des valeurs appliquée et mesurées aux étapes 70 et 80 une valeur de capacité du capteur textile, la valeur calculée étant enregistrée dans la mémoire 53B de l'unité de contrôle 50.

Les étapes 70 à 90 sont répétées plusieurs fois, et les mesures successives de capacité sont comparées entre elles.

Si une différence entre deux mesures de capacité successives est non nulle, alors on en déduit un changement d'état du capteur, notamment un écrasement du capteur.

Un alerte peut ensuite être envoyée à l'utilisateur avec les moyens d'alerte 60.

Les modes de réalisation et les variantes mentionnées ci-dessus peuvent être combinés entre eux pour générer de nouveaux modes de réalisation de l'invention.

## Revendications

1. Capteur textile (100 ; 200), formé par tissage de fils conducteurs (122) et de fils isolants, le capteur présentant globalement une forme de ruban, qui s'étend selon un axe longitudinal (X100) et qui présente :
- une largeur (L100), mesurée selon un axe transversal (Y100) qui est orthogonal à l'axe longitudinal (X100), et
- une épaisseur (E100) mesurée selon un axe d'épaisseur (E100), qui est orthogonal à l'axe longitudinal (X100) et à l'axe transversal (Y100),
- le capteur textile (100 ; 200) comprend deux nappes textiles (110), qui sont agencées en regard l'un de l'autre, et qui sont reliées l'une à l'autre par des fils dits de liaison (140), **caractérisé en ce que** :
- chaque nappe comprend deux bandes latérales (118A, 188B), qui sont opposées l'une à l'autre, qui s'étendent le long de l'axe longitudinal (X100) et qui sont séparées par une bande centrale (120), la bande centrale comprenant des fils de chaine (112) incluant les fils conducteurs (122), de manière à former une piste de conduction (124) qui s'étend parallèlement à l'axe longitudinal (X100),
- les fils de liaison (140) relient chaque bande latérale d'une nappe à une bande latérale respective de l'autre nappe,
- la piste de conduction (124) d'une nappe est agencée en regard de la piste de conduction (124) de l'autre nappe,
- les fils de liaison (140) forment ensemble une structure d'amortissement (141) élastiquement déformable entre une configuration relâchée, dans laquelle la structure d'amortissement maintient les deux pistes de conduction (124) à distance et en regard l'une de l'autre, et une configuration contrainte, dans laquelle deux pistes de conduction (124) sont plus proches l'une de l'autre que dans la configuration relâchée, la structure d'amortissement (141) tendant à revenir dans sa configuration relâchée par retour élastique.

2. Capteur textile (100 ; 200) selon la revendication précédente, dans lequel chaque nappe (110) comprend un fil de trame (114) conducteur, tandis que les fils de liaison (140) sont isolants.

3. Capteur textile (100 ; 200) selon la revendication précédente, dans lequel chaque fil de trame (114) est mono filament et présente, de préférence, un diamètre compris entre 0,1 et 0,2 mm, de préférence encore compris entre 0,12 et 0,18 mm, de préférence encore égal à 0,15 mm.

4. Capteur textile (100 ; 200) selon l'une quelconque des revendications précédentes, dans lequel :
- les fils de liaison (140) présentent un titrage compris entre 17 et 1000 dtex, de préférence compris entre 100 et 500 dtex, de préférence encore compris entre 150 et 200 dtex, et/ou
- les fils de liaison (140) comprennent chacun un nombre de brins compris entre 1 et 200, de préférence compris entre 20 et 150, de préférence encore compris entre 40 et 100.

5. Capteur textile (100 ; 200) selon l'une quelconque des revendications précédentes, dans lequel les fils conducteurs (122) sont des fils métalliques, de préférence réalisés en cuivre ou un de ses alliages.

6. Dispositif de détection, comprenant :
- un capteur textile (100 ; 200) conforme à l'une quelconque des revendications précédentes,
- un connecteur (20), qui est monté sur le capteur textile et qui comprend au moins deux bornes d'entrée, chaque borne d'entrée étant reliée à une piste de conduction (124) respective du capteur textile,
- une unité de contrôle (50), qui est connectée à chacune des pistes de conduction (124) du capteur textile (100 ; 200) par l'intermédiaire du connecteur (20), l'unité électronique de contrôle comprenant :
• une unité logique de calcul (52),
• une source d'énergie électrique (54),
dans lequel l'unité de contrôle (50) est configurée :
- pour appliquer (70) une première grandeur électrique aux bornes d'entrée,
- pour mesurer (80) une deuxième grandeur électrique aux bornes d'entrée,
- en fonction des première et deuxième grandeurs électriques, en déduire (90) une information sur l'état du capteur textile (100 ; 200).

7. Méthode de détection, mise en oeuvre au moyen du dispositif de détection (10) conforme à la revendication précédente, la méthode de détection comprenant les étapes successives consistant à :
a) appliquer (70) une première grandeur électrique (V1) aux bornes d'entrée (26) reliées aux deux pistes de conduction (124), et mesurer (80) une deuxième grandeur électrique (I2) aux bornes d'entrée,
b) en fonction des première et deuxième grandeurs électriques, en déduire (90) une information sur l'état du capteur textile (100 ; 200).

8. Méthode de détection selon la revendication précédente, dans laquelle :
- à l'étape a), la première grandeur électrique est une tension continue (V1), appliquée entre les bornes d'entrée, tandis que la deuxième grandeur électrique est un courant électrique (I2),
- à l'étape b), si la deuxième grandeur électrique (I2) est non nulle, alors on en déduit un contact entre les deux pistes de conduction (124).

9. Méthode de détection selon la revendication 7, le capteur textile étant conforme à la revendication 2, dans laquelle :
- à l'étape a), la première grandeur électrique est un courant électrique, tandis que la deuxième grandeur électrique est une tension électrique,
- à l'étape b), on en déduit une capacité du capteur textile, la valeur calculée étant enregistrée dans une mémoire de l'unité de contrôle,
- les étapes a) et b) sont répétées plusieurs fois, et les valeurs successives de capacité sont comparées entre elles,
- si une différence entre deux mesures de capacité successives est non nulle, alors on en déduit un changement d'état du capteur, notamment un écrasement du capteur.

## Patentansprüche

1. Textilsensor (100; 200), der durch Weben von leitenden Fäden (122) und isolierenden Fäden gebildet wird, wobei der Sensor insgesamt eine Bandform aufweist, die sich entlang einer Längsachse (X100) erstreckt und die Folgendes aufweist:
- eine Breite (L100), gemessen entlang einer Querachse (Y100), die orthogonal zu der Längsachse (X100) ist, und
- eine Stärke (E100), gemessen entlang einer Stärkenachse (E100), die orthogonal zu der Längsachse (X100) und zu der Querachse (Y100) ist,
- der Textilsensor (100; 200) zwei Textillagen (110) umfasst, die einander gegenüberliegend angeordnet sind und die durch sogenannte Verbindungsfäden (140) miteinander verbunden sind, **dadurch gekennzeichnet, dass**:
- jede Lage zwei Seitenstreifen (118A, 188B) umfasst, die einander gegenüberliegen, sich entlang der Längsachse (X100) erstrecken und durch einen Mittelstreifen (120) getrennt sind, wobei der Mittelstreifen Kettfäden (112) umfasst, die die leitenden Fäden (122) beinhalten, um eine Leiterbahn (124) zu bilden, die sich parallel zu der Längsachse (X100) erstreckt,
- die Verbindungsfäden (140) jeden Seitenstreifen einer Lage mit einem entsprechenden Seitenstreifen der anderen Lage verbinden,
- die Leiterbahn (124) einer Lage gegenüber der Leiterbahn (124) der anderen Lage angeordnet ist,
- die Verbindungsfäden (140) zusammen eine Dämpfungsstruktur (141) bilden, die zwischen einer entspannten Konfiguration, in der die Dämpfungsstruktur die zwei Leiterbahnen (124) in einem Abstand voneinander hält, und einer gespannten Konfiguration, in der zwei Leiterbahnen (124) näher zueinander sind als in der entspannten Konfiguration, elastisch verformbar ist, wobei die Dämpfungsstruktur (141) dazu neigt, durch elastische Rückfederung in ihre entspannte Konfiguration zurückzukehren.

2. Textilsensor (100; 200) nach dem vorherigen Anspruch,
wobei jede Lage (110) einen leitenden Schussfaden (114) umfasst, während die Verbindungsfäden (140) isolierend sind.

3. Textilsensor (100; 200) nach dem vorherigen Anspruch, wobei
jeder Schussfaden (114) ein Monofilament ist und vorzugsweise einen Durchmesser zwischen 0,1 und 0,2 mm, bevorzugter zwischen 0,12 und 0,18 mm, bevorzugter gleich 0,15 mm, aufweist.

4. Textilsensor (100; 200) nach einem der vorherigen Ansprüche, wobei:
- die Verbindungsfäden (140) eine Titerangabe zwischen 17 und 1000 dtex, vorzugsweise zwischen 100 und 500 dtex, bevorzugter zwischen 150 und 200 dtex, aufweisen, und/oder
- die Verbindungsfäden (140) jeweils eine Anzahl von Strängen zwischen 1 und 200, vorzugsweise zwischen 20 und 150, bevorzugter zwischen 40 und 100, umfassen.

5. Textilsensor (100; 200) nach einem der vorherigen Ansprüche, wobei die Leiterdrähte (122) Metallfäden sind, die vorzugsweise aus Kupfer oder einer seiner Legierungen gefertigt sind.

6. Erfassungsvorrichtung, umfassend:
- einen Textilsensor (100; 200) nach einem der vorherigen Ansprüche,
- einen Verbinder (20), der an dem Textilsensor montiert ist und mindestens zwei Eingangsanschlüsse umfasst, wobei jeder Eingangsanschluss mit einer jeweiligen Leiterbahn (124) des Textilsensors verbunden ist,
- eine Steuereinheit (50), die über den Verbinder (20) mit jeder der Leitungsbahnen (124) des Textilsensors (100; 200) verbunden ist, die elektronische Steuereinheit umfassend:
• eine logische Recheneinheit (52),
• eine elektrische Energiequelle (54),
wobei die Steuereinheit (50) zu Folgendem konfiguriert ist:
- Anlegen (70) einer ersten elektrischen Größe an die Eingangsanschlüsse,
- Messen (80) einer zweiten elektrischen Größe an den Eingangsanschlüssen,
- abhängig von der ersten und der zweiten elektrischen Größe, ableiten (90) von Informationen über den Zustand des Textilsensors (100; 200).

7. Erfassungsverfahren, das mittels der Erfassungsvorrichtung (10) gemäß dem vorherigen Anspruch durchgeführt wird, wobei das Erfassungsverfahren die aufeinanderfolgenden Schritte umfasst, die aus Folgendem bestehen:
a) Anlegen (70) einer ersten elektrischen Größe (V1) an die Eingangsanschlüsse (26), die mit den zwei Leiterbahnen (124) verbunden sind, und Messen (80) einer zweiten elektrischen Größe (I2) an den Eingangsanschlüssen,
b) abhängig von der ersten und der zweiten elektrischen Größe, ableiten (90) von Informationen über den Zustand des Textilsensors (100; 200).

8. Erfassungsverfahren nach dem vorherigen Anspruch, wobei:
- in Schritt a) die erste elektrische Größe eine Gleichspannung (V1) ist, die zwischen den Eingangsanschlüssen angelegt wird, während die zweite elektrische Größe ein elektrischer Strom (I2) ist,
- in Schritt b), wenn die zweite elektrische Größe (I2) ungleich Null ist, dann daraus ein Kontakt zwischen den zwei Leiterbahnen (124) abgeleitet wird.

9. Erfassungsverfahren nach Anspruch 7, wobei der Textilsensor nach Anspruch 2 ist, wobei:
- in Schritt a) die erste elektrische Größe ein elektrischer Strom ist, während die zweite elektrische Größe eine elektrische Spannung ist,
- in Schritt b) daraus eine Kapazität des Textilsensors abgeleitet wird, wobei der berechnete Wert in einem Speicher der Steuereinheit gespeichert wird,
- die Schritte a) und b) mehrmals wiederholt werden, und die aufeinanderfolgenden Kapazitätswerte miteinander verglichen werden,
- wenn eine Differenz zwischen zwei aufeinanderfolgenden Kapazitätsmessungen ungleich Null ist, dann daraus eine Zustandsänderung des Sensors abgeleitet wird, insbesondere eine Quetschung des Sensors.

## Claims

1. A textile sensor (100; 200) formed by weaving conductive threads (122) and insulating threads, the sensor being generally ribbon-shaped, extending along a longitudinal axis (X100) and having:
- a width (L100), measured along a transverse axis (Y100) which is orthogonal to the longitudinal axis (X100), and
- a thickness (E100) measured along a thickness axis (E100), which is orthogonal to the longitudinal axis (X100) and the transverse axis (Y100),
- the textile sensor (100; 200) comprises two textile sheets (110), which are arranged facing each other, and which are connected to each other by so-called connecting threads (140), **characterised in that**:
- each sheet comprises two lateral strips (118A, 188B), which are opposite each other, which extend along the longitudinal axis (X100) and which are separated by a central strip (120), the central strip comprising warp threads (112) including the conductive threads (122), so as to form a conduction track (124) which extends parallel to the longitudinal axis (X100),
- the connecting threads (140) connect each side strip of one sheet to a respective side strip of the other sheet,
- the conduction track (124) of one sheet is arranged opposite the conduction track (124) of the other sheet,
- the connecting threads (140) together form a damping structure (141) that is resiliently deformable between a relaxed configuration, wherein the damping structure holds the two conduction tracks (124) at a distance from and facing each other, and a stressed configuration, wherein two conduction tracks (124) are closer together than in the relaxed configuration, the damping structure (141) tending to return to its relaxed configuration by resilient return.

2. The textile sensor (100; 200) according to the preceding claim,
wherein each sheet (110) comprises a conductive weft thread (114), while the connecting threads (140) are insulating.

3. The textile sensor (100, 200) according to the preceding claim, wherein:
each weft thread (114) is monofilament and preferably has a diameter of between 0.1 and 0.2 mm, more preferably between 0.12 and 0.18 mm, even more preferably equal to 0.15 mm.

4. The textile sensor (100; 200) according to any one of the preceding claims, wherein:
- the connecting threads (140) have a titre of between 17 and 1000 dtex, preferably between 100 and 500 dtex, even more preferably between 150 and 200 dtex, and/or
- the connecting threads (140) each comprise a number of strands between 1 and 200, preferably between 20 and 150, and even more preferably between 40 and 100.

5. The textile sensor (100; 200) according to any one of the preceding claims, wherein the conductive threads (122) are metal wires, preferably made of copper or one of its alloys.

6. A detection system, comprising:
- a textile sensor (100; 200) according to any of the preceding claims,
- a connector (20), which is mounted on the textile sensor and which comprises at least two input terminals, each input terminal being connected to a respective conduction track (124) of the textile sensor,
- a control unit (50), which is connected to each of the conduction tracks (124) of the textile sensor (100; 200) via the connector (20), the electronic control unit comprising:
• a calculation logic unit (52),
• an electrical energy source (54),
wherein the control unit (50) is configured:
- to apply (70) a first electrical quantity to the input terminals,
- to measure (80) a second electrical quantity at the input terminals,
- as a function of the first and second electrical quantities, to deduce (90) information about the state of the textile sensor (100; 200).

7. The detection method, implemented by means of the detection device (10) according to the preceding claim, the detection method comprising the successive steps of:
a) applying (70) a first electrical quantity (V1) to the input terminals (26) connected to the two conduction tracks (124), and measuring (80) a second electrical quantity (I2) at the input terminals,
b) as a function of the first and second electrical quantities, to deduce (90) information about the state of the textile sensor (100; 200).

8. The detection method according to the preceding claim, wherein:
- in step a), the first electrical quantity is a DC voltage (V1), applied between the input terminals, while the second electrical quantity is an electrical current (I2),
- in step b), if the second electrical quantity (I2) is non-zero, then contact is inferred between the two conduction paths (124).

9. The detection method according to claim 7, the textile sensor being as claimed in claim 2, wherein:
- in step a), the first electrical quantity is an electrical current, while the second electrical quantity is an electrical voltage,
- in step b), a capacitance of the textile sensor is deduced, the calculated value being stored in a memory in the control unit,
- steps a) and b) are repeated several times, and the successive capacitance values are compared with each other,
- if a difference between two successive capacitance measurements is non-zero, then a change in the state of the sensor is inferred, in particular a crushing of the sensor.
